# EUROPEAN PATENT APPLICATION

(11) **EP 4 542 824 A1**
(43) Date of publication of application: **23.04.2025**
(21) Application number: 23826953.4
(22) Date of filing: 02.06.2023
(51) Int. Cl.: H02J 50/12, B60L 5/00, B60L 50/53, B60L 53/12, B60M 7/00, H02M 7/06, H02M 7/21

(54) **POWER-RECEIVING DEVICE, NONCONTACT POWER-FEEDING SYSTEM, AND NONCONTACT POWER-FEEDING METHOD**

(30) Priority: 20.06.2022 JP 2022099061
(71) Applicant: DENSO CORPORATION, Kariya-city, Aichi 448-8661 (JP)
(72) Inventor: TAKAHASHI, Masaya, Kariya-city, Aichi 448-8661 (JP); NAKAYASHIKI, Yusei, Kariya-city, Aichi 448-8661 (JP); SHIBANUMA, Mitsuru, Kariya-city, Aichi 448-8661 (JP); YAMAGUCHI, Nobuhisa, Kariya-city, Aichi 448-8661 (JP)
(74) Representative: TBK
(86) International application number: PCT/JP2023/020656
(87) International publication number: WO 2023/248766

(57) **Abstract**

A first power supply unit (41) rectifies, to first DC power, external AC power that is wirelessly received by a power receiving coil (31) using magnetic coupling. The first power supply unit supplies the converted first DC power to one or more loads (45) as main power. A second power supply unit (42) is connected to an input stage of the first power supply unit, and outputs second DC power used for control of the first power supply unit. This makes it possible to stably ensure the second DC power used for control of the first power supply unit even if the one or more loads are configured to receive power from the first power supply unit.

## Description

### CROSS-REFERENCE TO RELATED APPLICATION

The present application is based on and claims priority to Japanese Patent Application No. 2022-099061 filed on June 20, 2022, the disclosure of which is incorporated herein by reference.

### TECHNICAL FIELD

The present disclosure relates to technologies for wireless power transfer.

### BACKGROUND

There are various wireless power transfer systems, which wirelessly supply, to a vehicle traveling on a surface of an object, power through the surface. For example, Japanese Patent Application Publication No. 2014-138496 discloses a wireless power transfer system. The wireless power transfer system is configured to supply, from a primary power supply line located on or in a road surface on which a movable object is moving, power to the movable object through a power supply transformer. The movable object, which receives power wirelessly supplied from the primary power supply line, further includes a main circuit for supplying the received power to a power generating mechanism of the movable object, and may additionally include a control power source for supplying stabilized power to a brake circuit and/or a protection circuit of the movable object. The wireless power transfer system needs to enable the control power source to perform stable power supply or minimal power supply to the control circuit and/or protection circuit under various circumstances that can be encountered by the wireless power transfer system. It is important to ensure stable power for such a protection circuit, which is expected to perform fail-safe operations in case of failure.

### SUMMARY

The wireless power receiver portion of such a typical wireless power transfer system may include an interruption circuit provided between a power supply circuit and a power receiving unit, such as a power receiving coil; the interruption circuit may interrupt power supply therebetween to ensure safety. For example, the wireless receiver portion of such a typical wireless power transfer system may include a storage device, such as a battery, and may be configured to perform wireless power supply to temporarily store power in the storage device, and thereafter supply the power stored in the battery to components of the wireless power receiver portion.

Because the wireless power transfer of this configuration aims to charge the storage device, the wireless power transfer of the wireless power receiver portion may be typically configured as a constant-current circuit. If the wireless power transfer of the wireless power receiver portion is configured as a constant-current circuit, an increase in impedance of the wireless power receiver portion resulting from an opening of a load side, such as a battery side, of the wireless power receiver portion may cause an overvoltage to occur. An installation of a control structure for addressing such an issue in the wireless power transfer system may cause a new issue of how to secure supply of power for the control structure. This new issue may be similarly caused for power receiving apparatuses that supply main power to loads for any objects including such a movable object.

A first aspect of the present disclosure provides a power receiving apparatus for wireless receipt of power supply. The power receiving apparatus includes a power receiving coil configured to wirelessly receive external alternating-current power using magnetic coupling. and a first power supply unit including a rectifier circuit for converting the alternating-current power received by the power receiving coil into first direct-current power. The first power supply unit is configured to supply the first direct-current power to one or more loads as main power. The power receiving apparatus includes a second power supply unit connected to an input stage of the first power supply unit and configured to output second direct-current power used for control of the first power supply unit.

A second aspect of the present disclosure provides a wireless power transfer system. The wireless power transfer system includes a power receiving apparatus according to the first aspect, and a power transmission apparatus including a power transmission coil. When the power receiving coil is located to be close to the power transmission coil, the power transmission coil is magnetically coupled to the power receiving coil to accordingly supply the alternating-current power to the power receiving coil.

A third aspect of the present disclosure provides a method of wireless power transfer. The method includes
(i) Applying an alternating-current voltage to a power transmission coil of a power transmission apparatus
(ii) Converting, into direct-current power, alternating-current power electromagnetically induced in a power receiving coil located at a position where the power receiving coil is magnetically couplable with the power transmission coil, the direct-current power being supplied as main power to a one or more receiver loads
(iii) Receiving power from an input stage of the rectifier circuit
(iv) Outputting, based on the received power, power used to control the main power, the outputted power having a level lower than a level of the main power.

Each of the first to third aspects obtains the power received from the input stage of the rectifier circuit that supplies the main power to the one or more loads as direct-current power whose level is lower than the level of the main power. This therefore enables control related to the output of the main power to be continuously performed even if there is an anomaly in a circuit using the main power and/or an anomaly in a circuit supplying the main power so that the supply of the main power is stopped.

The present disclosure can be implemented as various configurations. For example, the present disclosure can be implemented as, for example, a method of designing a power receiving system in addition to the above power receiving apparatus.

### BRIEF DESCRIPTION OF THE DRAWINGS

Other aspects of the present disclosure will become apparent from the following description of embodiments with reference to the accompanying drawings in which:
Fig. 1 is a schematic structural diagram illustrating a wireless power transfer system including a power receiving apparatus according to the first embodiment;
Fig. 2 is a block diagram illustrating an example of the circuit structure of a main power supply apparatus;
Fig. 3 is a circuit block diagram illustrating a schematic configuration of each power transmission apparatus and the power receiving apparatus;
Fig. 4 is a circuit block diagram schematically illustrating an example of the specific configuration of a DC power supply unit of a selected power transmission apparatus;
Fig. 5A is a circuit block diagram illustrating a first schematic configuration example of the power receiving apparatus including a first power supply unit;
Fig. 5B is a circuit block diagram illustrating a second schematic configuration example of the power receiving apparatus;
Fig. 6 is a circuit diagram illustrating a first circuit configuration of a DC power supply unit and a first circuit configuration of the second power supply unit;
Fig. 7 is a circuit diagram illustrating a second circuit configuration of a DC power supply unit and a second circuit configuration of the second power supply unit;
Fig. 8 is a circuit diagram illustrating a third circuit configuration of a DC power supply unit and a third circuit configuration of the second power supply unit;
Fig. 9 is a circuit diagram illustrating a fourth circuit configuration of a DC power supply unit and a fourth circuit configuration of the second power supply unit;
Fig. 10 is a circuit block diagram illustrating a first configuration example of how the first power supply unit is connected to the second power supply unit when the power receiving apparatus includes an immittance filter;
Fig. 11 is a circuit block diagram illustrating a second configuration example of how the first power supply unit is connected to the second power supply unit;
Fig. 12 is a circuit block diagram illustrating a third configuration example of how the first power supply unit is connected to the second power supply unit;
Fig. 13 is a circuit block diagram illustrating a first configuration example that short-circuits an output of the first power supply unit using power of the second power supply unit;
Fig. 14 is a circuit block diagram illustrating a second configuration example that short-circuits the output of the first power supply unit using power of the second power supply unit; and
Fig. 15 is a circuit block diagram illustrating a third configuration example that short-circuits the output of the first power supply unit using power of the second power supply unit.

### DETAILED DESCRIPTION OF EMBODIMENTS

### First embodiment

### OVERALL CONFIGURATION OF WIRELESS POWER TRANSFER SYSTEM

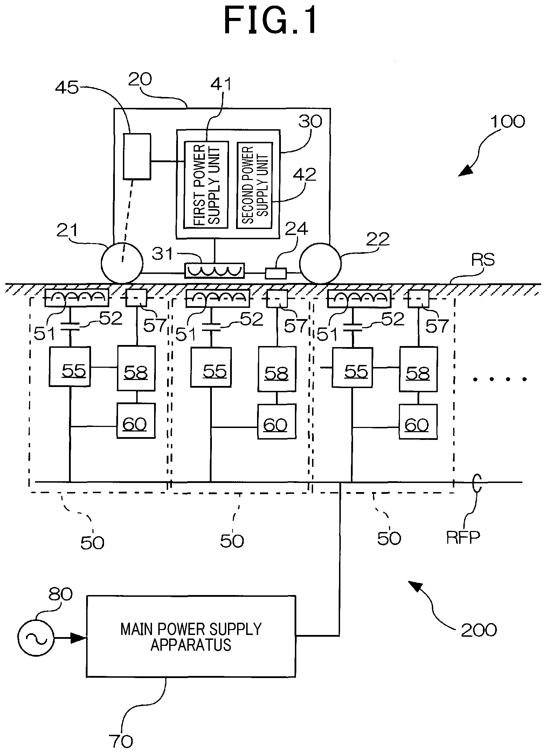

Fig. 1 is a schematic structural diagram illustrating a wireless power transfer system 100 including a power receiving apparatus 30 according to the first embodiment. As illustrated in Fig. 1, the wireless power transfer system 100 includes a plurality of power transmission apparatuses 50 embedded inside a road and located in a surface RS of the road. The wireless power transfer system includes the power receiving apparatus 30 installed in a movable object 20 that is configured to autonomously travel on the road surface RS.

The movable object 20 includes loads 45 that include an unillustrated motor, one or more driving wheels 21, one or more driven wheels 22, a power receiving coil 31 of the power receiving apparatus 30, and a magnet 24. The power receiving apparatus 30 includes a first power supply unit 41 and a second power supply unit 42. The one or more driving wheels 21 are driven by the motor of the loads 45. The one or more driving wheels 21 and the one or more driven wheels 22 movably support the movable body 20 on the road surface RS. The power receiving coil 31 is mounted under the floor of the movable object 20, and the magnet 24 is similarly mounted under the floor of the movable object 20.

Each power transmission apparatus 50 includes a power transmission coil 51.

When magnetically coupled to a power transmission coil 51 located under the road surface RS, the power receiving coil 31 receives alternating-current (AC) power from the power transmission coil 51. Each of the first and second power supply units 41 and 42 converts the AC power into direct-current (DC) power. In particular, the first power supply unit 41 supplies the DC power to the loads 45. The power supplied from the first power supply unit 41 serves as main power used by at least the movable object 20. The second power supply unit 42 outputs the converted DC power that is used for control of the first power supply unit 41.

As a modification, the power transmission apparatuses 50 can be mounted on the road surface RS, mounted on or in a wall surface, or mounted on or in a ceiling. In this modification, the power receiving apparatus 30 can be arranged in or on the movable object 20 to correspond to the mount location of the power transmission apparatuses 50. For example, if the power transmission apparatuses 50 are laid on the wall surface, the power receiving apparatus 30 can be mounted on one side of the movable object 20. The power receiving apparatus 30 can be configured to move depending on the mount location of the power transmission apparatuses 50. Alternatively, the movable object 20 can include a plurality of power receiving apparatuses 30, and at least one of the plurality of power receiving apparatuses 30 can be selected to be used depending on the mount location of the power transmission apparatuses 50.

The power transmission apparatuses 50 for supplying power to the power receiving apparatus 30 of the movable object 20 have the same configuration, and are arranged along a predetermined route to be moved by the movable object 20. The power transmission apparatuses 50 can be two-dimensionally arranged in or on the road surface RS. Each power transmission apparatus 50 is connected to common main power-supply lines RFP to which high-frequency AC power, such as AC power at 85 KHz, is supplied from a main power supply apparatus 70. At least one of the power transmission apparatuses 50 according to the first embodiment can have a different configuration from the configurations of the remaining power transmission apparatuses 50 as long as they can transfer power to the power receiving apparatus 30. For example, the power transmission apparatuses 50 can be arranged with their alternating different-sized power transmission coils 51 aligned.

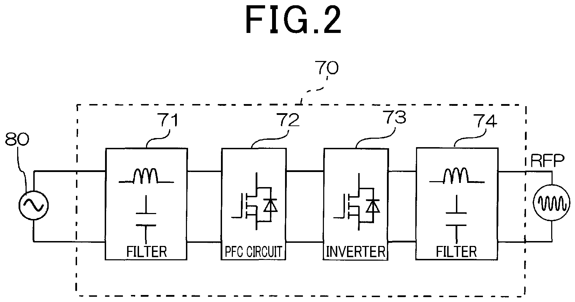

The main power supply apparatus 70 is configured to receive low-frequency AC power, such as AC power at 60Hz, supplied from a main power source 80, and convert the received low-frequency AC power into the high-frequency AC power. Fig. 2 illustrates an example of the circuit structure of the main power supply apparatus 70. Specifically, the main power supply apparatus 70 includes a noise filter 71 for AC output, a power factor correction (PFC) circuit 72, an inverter 73, and a filter 74. The PFC circuit 72 is a well-known circuit configured to reduce a phase difference between an input voltage generated by the noise filter 71 and an output current thereof to accordingly reduce harmonic components of the output current, thus correcting a power factor of output power thereof to be close to 1. The inverter 73 is configured to convert AC power supplied from the main power source 80, which has been passed through the noise filter 71 and the PFC circuit 72, into the high-frequency AC power, and output the high-frequency AC power to the main power-supply lines RFP.

Each power transmission apparatus 50 is configured to operate based on the AC power supplied through the main power-supply lines RFP.

Each power transmission apparatus 50 includes, as illustrated in Fig. 1, the power transmission coil 51 and a resonance capacitor 52 that serve as a resonance circuit. Each power transmission apparatus 50 includes an impedance circuit 55 interposed between the resonance capacitor 52 and the main power supply lines RFP. The impedance circuit 55 is configured to control the supply of the high-frequency power from the main power supply lines RFP to the resonance circuit. As an equivalent circuit for the impedance circuit 55, a relay and/or a switch can be used for enabling the supply of the high-frequency power to the resonance circuit or interrupting the supply of the high-frequency power to the resonance circuit.

Each power transmission apparatus 50 additionally includes, for example, a control circuit 58, a hole device 57, and a DC power supply unit 60. The control circuit 58 is configured to control the impedance circuit 55. The hole device 57 of each power transmission apparatus 50 is a magnetic sensor for detecting the approaching of the movable object 20 thereto. The DC power supply unit 60 is configured to supply DC power to the control circuit 58 for operating the control circuit 58. The detail of each power transmission apparatus 50 will be described later. At least one of the power transmission apparatuses 50, which the movable object 20 approaches, is configured to only operate. When the movable object 20 approaches a selected power transmission apparatus 50, the hole device 57 of the selected power transmission apparatus 50 is configured to detect magnetic force of the magnet 24 of the approaching movable object 20 to accordingly detect the approaching of the movable object 20 to the selected power transmission apparatus 50.

When the hole device 57 of a selected power transmission apparatus 50 detects the approaching of the movable object 20 to the selected power transmission apparatus 50, the control circuit 58 of the selected power transmission apparatus 50 is configured to change an impedance of the impedance circuit 55. For example, let us assume that the impedance circuit 55 has a circuit configuration that can be switched on or off. In this assumption, the control circuit 58 of a selected power transmission apparatus 50 controls the impedance circuit 55 to be switched on, i.e., to pass current flow therethrough, when the hole device 57 of the selected power transmission apparatus 50 detects the approaching of the movable object 20 to the selected power transmission apparatus 50. Otherwise, the control circuit 58 of the selected power transmission apparatus 50 controls the impedance circuit 55 to be switched off, i.e., to interrupt current flow therethrough, when the hole device 57 of the selected power transmission apparatus 50 detects separation of the movable object 20 from a power receivable range of the power transmission coil 51 of the selected power transmission apparatus 50; the power receivable range of the power transmission coil 51 is defined so that, when the movable object 20 is located within the power receivable range of the power transmission coil 51, the movable object 20 can receive power from the power transmission coil 51. Approach of the movable object 20 to a selected power transmission apparatus 50 or separation thereof from the selected power transmission apparatus 50 can also be detected using one of other methods. Each power transmission apparatus 50 can be configured to use one of the other methods, which detects change in mutual inductance depending on approaching or separation of the power receiving coil 31 of the movable object 20 to or from the power transmission coil 51 of the corresponding power transmission apparatus 50. Two or more of the power transmission apparatuses 50, which the movable object 20 approaches, can be configured to operate.

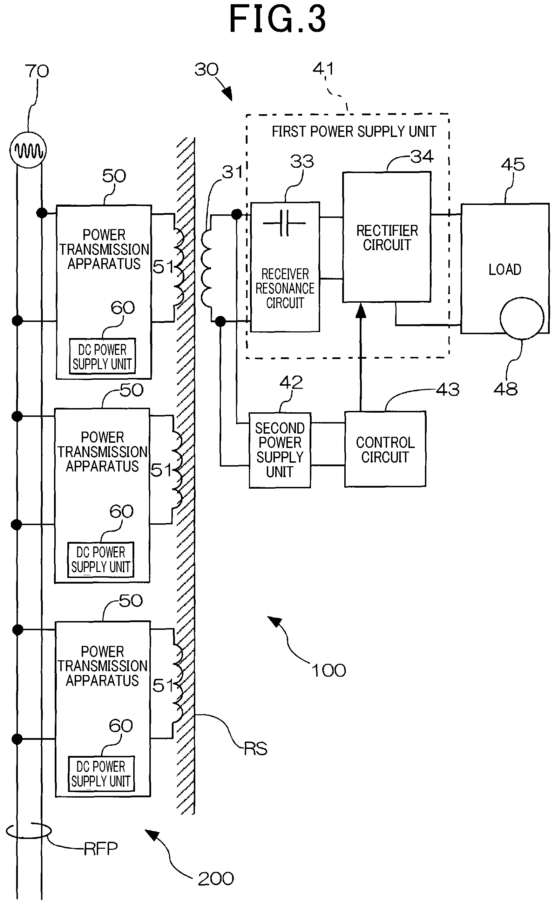

Fig. 3 illustrates a schematic configuration of each of the power transmission apparatuses 50 and the power receiving apparatus 30. In particular, Fig. 3 illustrates a situation where a selected power transmission apparatus 50 supplies power to the power receiving apparatus 30. At that time, the power transmission coil 51 of the selected power transmission apparatus 50 is magnetically coupled with the power receiving coil 31 of the power receiving apparatus 30, resulting in an inductive current, i.e., an alternating current, of AC power flowing through the power receiving coil 31 of the power receiving apparatus 30.

The first power supply unit 41 includes a receiver resonance circuit 33 and a rectifier circuit 34 connected subsequently to the receiver resonance circuit 33. The receiver resonance circuit 33 enables the power receiving coil 31 to efficiently receive power from the selected power transmission apparatus 50. The AC power received by the power receiving coil 31, which is sent to the rectifier circuit 34 through the receiver resonance circuit 33, is converted by the rectifier circuit 34 into DC power. The DC power is outputted from the rectifier circuit 34 to the loads 45. Fig. 3 illustrates that all the loads 45 use the DC power, i.e., main power, outputted from the first power supply unit 41. Specifically, the loads 45 include a motor 48 that uses the main power for moving the movable object 20. The loads 45 may include a battery that can temporarily store power.

The second power supply unit 42 is configured to generate DC power having a smaller level in addition to the first power supply unit 41. Specifically, the second power supply unit 42 is connected to both ends of the receiver resonance circuit 33, and is configured to operate based on power across the power receiving coil 31 located at an input stage of the receiver resonance circuit 33. A DC voltage based on the DC power outputted from the second power supply unit 42 can be used by, for example, a control circuit 43. Specific circuit configurations of the second power supply unit 42 and the control circuit 43 will be collectively described later.

The following lays out the above configuration of the wireless power transfer system 100 in terms of wireless power transfer. In the ground side, the main power source 80 serves as a power supply source, and the main power supply apparatus 70 installed on the ground side converts low-frequency AC power outputted from the main power source 80 into high-frequency AC power, thus supplying the high-frequency AC power to the main power-supply lines RFP. Installation of the main power-supply lines RFP in the ground side enables the high-frequency AC power to be supplied to all the power transmission apparatuses 50 installed under the road surface RS. Although communication lines may be installed on the ground side for communications with the power transmission apparatuses 50, as power supply lines, installation of the main power-supply lines RFP in the ground side is enough to supply power to the power transmission apparatuses 50. In each power transmission apparatus 50, the resonance capacitor 52 and the power transmission coil 51 serve as a resonance circuit to which reference character 53 is assigned, and the resonance circuit 53 supplies the high-frequency AC power to the movable object 20 in a contactless manner. In each power transmission apparatus 50, DC power required for components in the corresponding power transmission apparatus 50 is generated by the DC power supply unit 60.

In the power receiving apparatus 30 of the movable object 20, the receiver resonance circuit 33 of the first power supply unit 41 efficiently receives an inductive current induced to flow through the power receiving coil 31 that is magnetically coupled with the power transmission coil 51 of a selected power transmission apparatus 50. Then, the receiver resonance circuit 33 of the first power supply unit 41 supplies DC power based on the received inductive current to the loads 45 through the rectifier circuit 34. That is, the first power supply unit 41, which has the above structure, supplies the DC power to the loads 45.

On the other hand, the second power supply unit 42 is configured to generate the DC power having the smaller level that is used for the movable object 20.

That is, all power wirelessly supplied to and used by the movable object 20 and power required for each power transmission apparatus 50 can be covered by only the AC power supplied from the main power-supply lines RFP.

### CONFIGURATION AND OPERATION OF EACH OF DC POWER SUPPLY UNIT AND SECOND POWER SUPPLY UNIT

The following describes a specific configuration of the DC power supply unit 60 of each power transmission apparatus 50 and a specific configuration of the second power supply unit 42 of the power receiving apparatus 30. Additionally, the following describes how the DC power supply unit 60 of each power transmission apparatus 50 works, and how the second power supply unit 42 of the power receiving apparatus 30. works.

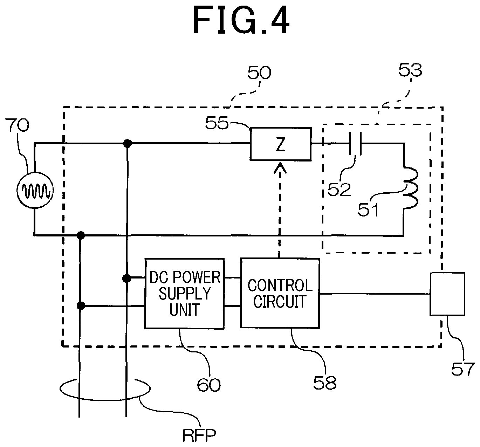

Fig. 4 schematically illustrates an example of the specific configuration of the DC power supply unit 60 of a selected power transmission apparatus 50. As described above, the DC power supply unit 60 of the power transmission apparatus 50 supplies DC power to, for example, the control circuit 58 included in the selected power transmission apparatus 50 as an operating voltage of the control circuit 58. The control circuit 58 of the selected power transmission apparatus 50 illustrated as an example in Fig. 4 is connected to the hole device 57, and the control circuit 58 of the selected power transmission apparatus 50 illustrate controls the impedance circuit 55 in response to when the hole device 57 detects the magnetic force of the magnet 24 of the movable object 20 approaching the selected power transmission apparatus 50. The DC power supplied from the DC power supply unit 60 to the control circuit 58 serves as operating power of the control circuit 58. Specifically, the DC power supply unit 60 serves as a DC power source to supply, as the DC power, a predetermined low DC voltage, such as 5 V, to the control circuit 58.

The DC power supply unit 60 is configured to receive the high-frequency AC power from the main power-supply lines RFP. Because the high-frequency AC power has a high voltage, there is known a configuration that steps down the high voltage of the high-frequency AC power using a transformer, and thereafter rectifies the stepped-down voltage of the high-frequency AC power to a low DC voltage.

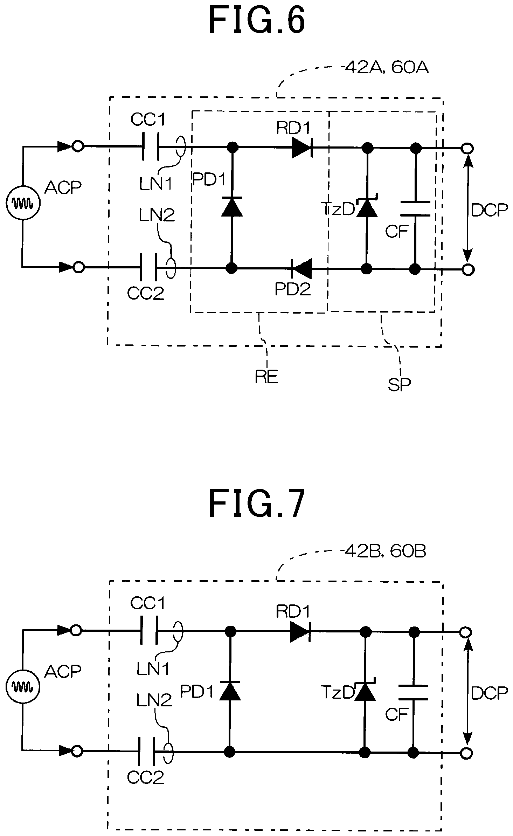

In contrast, the DC power supply unit 60 according to the first embodiment employs one of the following circuit configurations respectively illustrated in Figs. 6 to 9 described later, without employing a large-sized device, such as a transformer.

The second power supply unit 42 of the power receiving apparatus 30 similarly employs one of the following circuit configurations respectively illustrated in Figs. 6 to 9, which is identical to the configuration of the DC power supply unit 60. Specifically, a voltage induced in the power receiving coil 31 is a high-frequency AC voltage with a high level. The main power used in the movable object 20 is generated by the first power supply unit 41 so as to be supplied to the loads 45. In contrast, the DC power having the smaller level used by the power receiving apparatus 30 itself is supplied from the second power supply unit 42, so that the second power supply unit 42 employs the same configuration as that of the DC power supply unit 60.

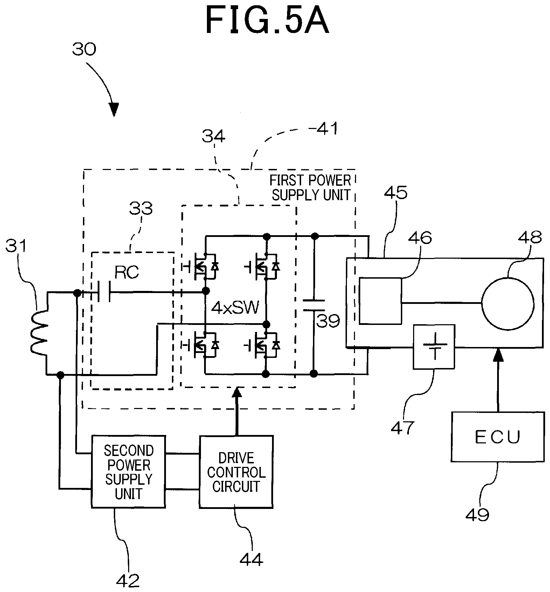

Fig. 5A illustrates an example of the internal circuit configuration of the movable object 20 focusing on the power receiving apparatus 30.

The following describes how the first power supply unit 41 of the power receiving apparatus 30 works.

The receiver resonance circuit 33 of the first power supply unit 41 according to the first embodiment includes a resonance capacitor RC connected in series to the power receiving coil 31. The rectifier circuit 34 of the first power supply unit 41, which receives the AC power supplied from the receiver resonance circuit 33, is configured as a synchronous rectifier comprised of a first pair of diagonally positioned switching devices SW and a second pair of diagonally positioned switching devices SW. Alternately turning on the first pair of diagonally positioned switching devices SW and the second pair of diagonally positioned switching devices SW converts the AC power supplied to the rectifier circuit 34 into DC power. Output terminals of the rectifier circuit 34 are connected to a smoothing capacitor 39 of the first power supply unit 41 in parallel thereto. The smoothing capacitor 39 is configured to reduce ripples included in the rectified DC power and thereafter supply, to the loads 45, DC power whose ripples have been reduced.

The above describes how the first power supply unit 41 of the power receiving apparatus 30 works. The loads 45 include, for example, an inverter 46, the motor 48 driven based on the output of the inverter 46, and a battery 47.

The second power supply unit 42 is arranged to receive the AC power from the connection points between the power receiving coil 31 and the receiver resonance circuit 33 and to convert the AC power into DC power, thus outputting the DC power to a drive control circuit 44.

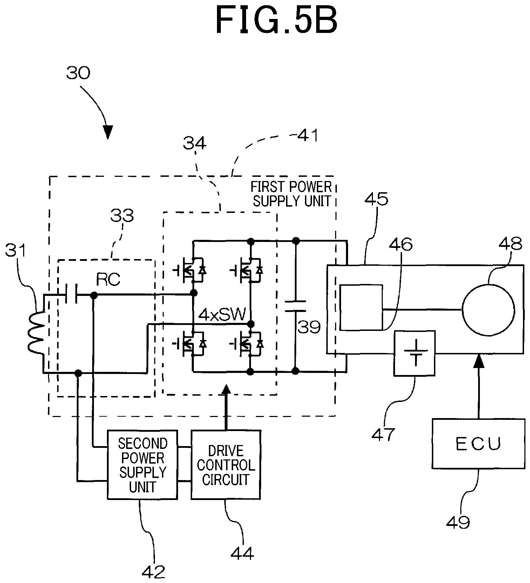

The drive control circuit 44 is configured to perform on-off control operations of the first pair of diagonally positioned switching devices SW of the rectifier circuit 34 and the second pair of diagonally positioned switching devices SW of the rectifier circuit 34; the rectifier circuit 34 serves as a synchronous rectifier. As illustrated in Fig. 5B, the second power supply unit 42 can be arranged to receive power from the downstream side of the resonance capacitor RC constituting the receiver resonance circuit 33, i.e., the input side of the rectifier circuit 34. The drive control circuit 44 illustrated in each of Figs. 5A and 5B is an example of the control circuit 43 illustrated in Fig. 3.

### First circuit configuration

The following describes first to fourth circuit configurations of each of the DC power supply unit 60 of each power transmission apparatus 50 and the second power supply unit 42 of the power receiving apparatus 30.

Fig. 6 is a circuit diagram illustrating the first circuit configuration of the DC power supply unit 60, which will be referred to as a DC power supply unit 60A, and the first circuit configuration of the second power supply unit 42, which will be referred to as a second power supply unit 42A.

The first circuit configuration of each of the DC power supply unit 60A and the second power supply unit 42A receives high-frequency high-voltage AC power ACP, and outputs DC power with a low voltage. Specifically, the DC power supply unit 60A is configured to receive high-frequency AC power with a high voltage from the main power-supply lines RFP, and the second power supply unit 42A is configured to receive high-frequency AC power with a high voltage induced in the power receiving coil 31.

Each of the DC power supply unit 60A and the second power supply unit 42A includes a pair of power-supply lines LN1 and LN2, and insulating capacitors CC1 and CC2 arranged on the respective power-supply lines LN1 and LN2. Each of the DC power supply unit 60A and the second power supply unit 42A includes a protective diode PD1 connected across an output side of the insulating capacitor CC1 and an output side of the insulating capacitor CC2. Each of the DC power supply unit 60A and the second power supply unit 42A includes a rectifier diode RD1 connected in series to the output side of the insulating capacitor CC1 in the forward direction, and a backflow prevention diode PD2 connected in series to the output side of the insulating capacitor CC2 in the reverse direction. Each of the DC power supply unit 60A and the second power supply unit 42A includes a Zener diode TzD and a smoothing capacitor CF connected across the cathode of the rectifier circuit RD1 and the anode of the backflow prevention diode PD2; the Zener diode TzD and smoothing capacitor CF are connected in parallel to each other.

A circuit portion of each of the DC power supply unit 60A and the second power supply unit 42A, which includes at least the rectifier diode RD1, will also be referred to as a rectifier unit RE. A circuit portion of each of the DC power supply unit 60A and the second power supply unit 42A, which includes at least Zener diode TzD and smoothing capacitor CF, will also be referred to as a stabilized power supply SP. The rectifier unit RE may include the protective diode PD1 and/or the backflow prevention diode PD2. This reference of each of the rectifier unit RE and the stabilized power supply SP according to the first circuit configuration illustrated in Fig. 6 can be similarly applied to the corresponding one of the rectifier unit RE and the stabilized power supply SP according to the respective second to fourth circuit configurations illustrated in Figs. 7 to 9.

Each of the DC power supply unit 60A and the second power supply unit 42A is electrically isolated by the insulating capacitors CC1 and CC2 from the supplier of the high-frequency high-voltage AC power ACP. Each of the DC power supply unit 60A and the second power supply unit 42A is configured such that change of the high-frequency high-voltage AC power ACP induces an AC voltage across the power-supply lines LN1 and LN2. During a first period for which the potential of the AC voltage at the power-supply line LN1 is higher than that of the AC voltage at the power-supply line LN2, charge stored in each of the insulating capacitors CC1 and CC2 charges the smoothing capacitor CF through the rectifier diode RD1. During a section of the first period for which a level of the AC voltage is higher than a Zener breakdown voltage, which will be referred to simply as Zener voltage, across the Zener diode TzD, a current based on the AC voltage flows through the Zener diode TzD so as to be recovered by the backflow prevention diode PD2. This prevents a voltage across the smoothing capacitor CF from exceeding the Zener voltage across the Zener diode TzD, thus maintaining a low DC voltage, to which reference character DCP is assigned, across the smoothing capacitor CF being lower than the Zener voltage.

During a second period for which the potential of the AC voltage at the power-supply line LN2 is higher than that of the AC voltage at the power-supply line LN1, a voltage difference between the power-supply lines LN1 and LN2 is maintained at a voltage drop across the protective diode PD1 in its forward direction, resulting in no influence on the smoothing capacitor CF. Although each of the DC power supply unit 60A and the second power supply unit 42A is connected to the supplier of the high-frequency high-voltage AC power ACP, a current based on the charge stored in each of the insulating capacitors CC1 and CC2 only flows through the power-supply lines LN1 and LN2 in each period of the AC voltage. For this reason, adjustment of the capacitance across each of the insulating capacitors CC1 and CC2 enables the amount of power outputted from each of the DC power supply unit 60A and the second power supply unit 42A to be easily adjusted.

That is, making the amount of power outputted from each of the DC power supply unit 60A and the second power supply unit 42A lower, i.e., making the capacitance across each of the insulating capacitors CC1 and CC2 smaller, enables capacitors, such as film capacitors, with a low dialectic withstand voltage to be employed as the respective insulating capacitors CC1 and CC2. This therefore makes it possible to easily provide the first circuit configuration of each of the DC power supply unit 60A and the second power supply unit 42A even if the high-frequency high-voltage AC power ACP is inputted to the corresponding one of the DC power supply unit 60A and the second power supply unit 42A.

Additionally, the insulating capacitors CC1 and CC2 easily enable electrical isolation of each of the DC power supply unit 60A and the second power supply unit 42A from the supplier of the high-frequency high-voltage AC power ACP, i.e., the main power-supply lines RFP or power supply lines of the first power supply unit 41. This enables each of the DC power supply unit 60A and the second power supply unit 42A to be less subject to, for example, noise, making it therefore possible to reduce the risk of the occurrence of erroneous operations of, for example, a control circuit that uses the output of the DC power supply unit 60A or the second power supply unit 42A.

The first circuit configuration of each of the DC power supply unit 60A and the second power supply unit 42A makes it possible to eliminate the need of providing voltage reduction devices, such as transformers, resulting in the size of the first configuration of each of the DC power supply unit 60A and the second power supply unit 42A being smaller. The first circuit configuration of each of the DC power supply unit 60A and the second power supply unit 42A has no resistors, and therefore has no loss due to resistors, resulting in each of the DC power supply unit 60A and the second power supply unit 42A having higher circuit efficiency.

### Second circuit configuration

The following describes the second circuit configuration of each of the DC power supply unit 60 of each power transmission apparatus 50 and the second power supply unit 42 of the power receiving apparatus 30 with reference to Fig. 7.

Fig. 7 is a circuit diagram illustrating the second circuit configuration of the DC power supply unit 60, which will be referred to as a DC power supply unit 60B, and the second circuit configuration of the second power supply unit 42, which will be referred to as a second power supply unit 42B.

As compared with the first circuit configuration illustrated in Fig. 6, the second circuit configuration is substantially identical to the first circuit configuration except that the second circuit configuration does not include the backflow prevention diode PD2.

The operations and the advantageous effects of the second circuit configuration are substantially identical to those of the first circuit configuration.

In particular, the second circuit configuration does not include a backflow prevention diode, resulting in the size thereof being smaller. Because of there being no occurrence of a voltage drop across a backflow prevention diode, the second circuit configuration enables the DC low voltage DCP to be higher by the level of the voltage drop.

### Third circuit configuration

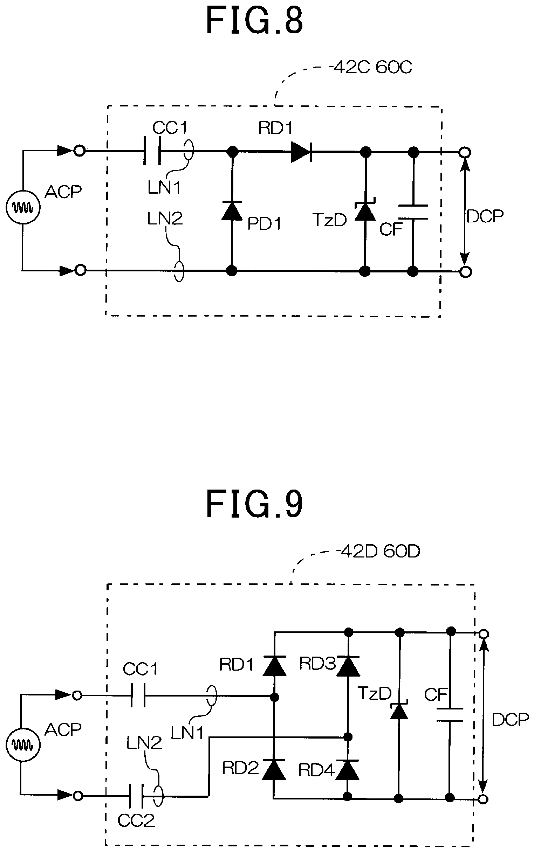

The following describes the third circuit configuration of each of the DC power supply unit 60 of each power transmission apparatus 50 and the second power supply unit 42 of the power receiving apparatus 30 with reference to Fig. 8.

Fig. 8 is a circuit diagram illustrating the third circuit configuration of the DC power supply unit 60, which will be referred to as a DC power supply unit 60C, and the third circuit configuration of the second power supply unit 42, which will be referred to as a second power supply unit 42C.

As compared with the second circuit configuration illustrated in Fig. 7, the third circuit configuration is substantially identical to the second circuit configuration except that the third circuit configuration does not include the insulating capacitor CC2 on the power-supply line LN2.

The operations and the advantageous effects of the third circuit configuration are substantially identical to those of the second circuit configuration.

In particular, the third circuit configuration, which does not include an insulating capacitor on the power-supply line LN2, enables the power-supply line LN2 to serve as a ground potential of the DC low voltage DCP.

### Fourth circuit configuration

The following describes the fourth circuit configuration of each of the DC power supply unit 60 of each power transmission apparatus 50 and the second power supply unit 42 of the power receiving apparatus 30 with reference to Fig. 8.

Fig. 9 is a circuit diagram illustrating the fourth circuit configuration of the DC power supply unit 60, which will be referred to as a DC power supply unit 60D, and the fourth circuit configuration of the second power supply unit 42, which will be referred to as a second power supply unit 42D.

As compared with the first circuit configuration illustrated in Fig. 6 or the second circuit configuration illustrated in Fig. 7, the fourth circuit configuration includes a diode bridge comprised of four rectifying diodes RD1, RD2, RD3, and RD4.

Each of the first to third circuit configurations is configured to perform half-wave rectification of the AC power ACP to accordingly convert the AC power ACP into a DC power DCP. In contrast, the fourth circuit configuration is configured to perform full-wave rectification of the AC power ACP to accordingly convert the AC power ACP into a DC power DCP. The fourth circuit configuration therefore substantially doubles the voltage conversion efficiency, resulting in the capacitance of each of the insulating capacitors CC1 and CC2 being smaller.

The fourth circuit configuration additionally achieves the same advantageous effects achieved by the first circuit configuration, which include the advantageous effect of making smaller the size of fourth circuit configuration of each of the DC power supply unit 60D and the second power supply unit 42D, and the advantageous effect of making higher the circuit efficiency of each of the DC power supply unit 60D and the second power supply unit 42D.

The power receiving apparatus 30 according to the first embodiment eliminates the need of supplying, to an apparatus for controlling the first power supply unit 41, part of power to be supplied to the loads 45, resulting in the power receiving configuration of the movable object 20 being simplified. Additionally, the second power supply unit 42, which has one of the first to fourth circuit configurations, eliminates the need of using a transformer or other similar devices for both voltage reduction and electrical isolation of the power-supply lines, and therefore has a more simplified circuit configuration, resulting in the size of the second power supply unit 42 being smaller and the circuit efficiency of the second power supply unit 42 being higher.

In the power transfer system 200, which includes the power transmission apparatuses 50 for wireless power transfer according to the first embodiment, each power transmission apparatus 50 is configured to internally generate a DC voltage as a power supply for a control circuit included in the corresponding power transmission apparatus 50. This eliminates the need of installing one or more other power-supply lines for supplying DC power to each power transmission apparatus 50 separately from the main power-supply lines RFP. This therefore improves the installability and ease of handling of the power transmission system 200. Additionally, the DC power supply unit 60, which has one of the first to fourth circuit configurations, eliminates the need of using a transformer or other similar devices for both voltage reduction and electrical isolation of the power-supply lines, and therefore has a more simplified circuit configuration, resulting in the size of the DC power supply unit 60 being smaller and the circuit efficiency of the DC power supply unit 60 being higher.

### Second embodiment

The following described a power receiving apparatus 30A according to the second embodiment.

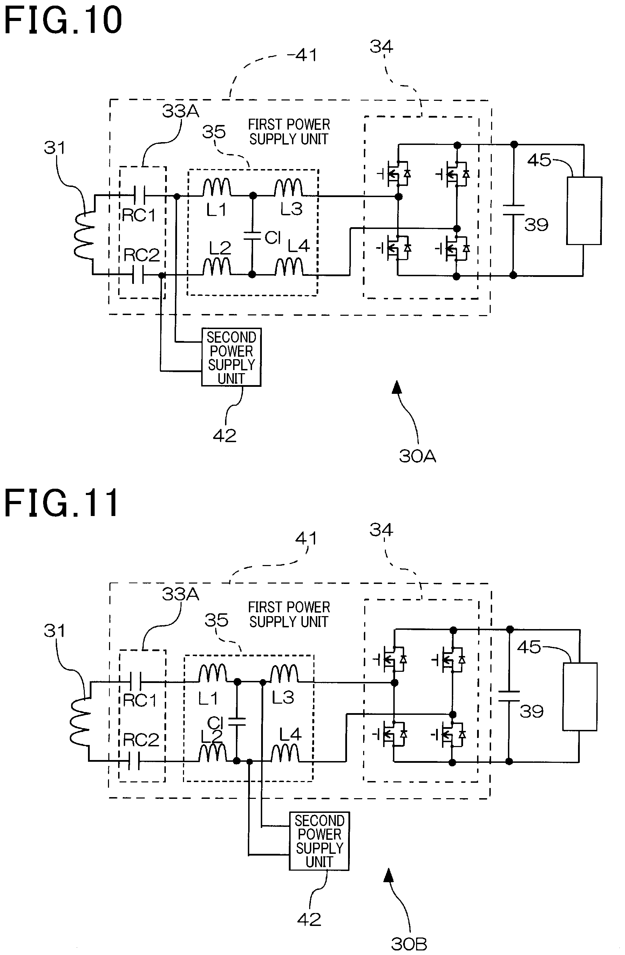

Fig. 10 schematically illustrates a configuration of the power receiving apparatus 30A. The power receiving apparatus 30A, which is different from the power receiving apparatus 30, includes a receiver resonance circuit 33A comprised of resonance capacitors RC1 and RC2 respectively arranged on both ends of the receiver coil 31. Additionally, the power receiving apparatus 30A includes an immittance filter 35 arranged between the receiver resonance circuit 33A and the rectifier circuit 34 located at an output stage of the receiver resonance circuit 33A. The receiver resonance circuit 33A has a circuit configuration that serves as a voltage source. The immittance filter 35 provided on the output of the receiver resonance circuit 33A serves as a current source. The output of the current source is usually used to charge a battery. The immittance filter 35 according to the second embodiment is comprised of four reactors L1, L2, L3, and L4 and a capacitor CI. The immittance filter 35 can be configured as a T-LCL immittance filter, π-CLC immittance filter, or a T-LCLC immittance filter.

The second embodiment is different from the first embodiment in that the immittance filter 35 is provided between the receiver resonance circuit 33A and the rectifier circuit 34. Additionally, the second embodiment is different from the first embodiment in that the second power supply unit 42 is connected to connection points between the receiver resonance circuit 33A and the immittance filter 35 located at the output stage of the receiver resonance circuit 33A, so that the second power supply unit 42 is configured to operate based on power supplied from the connection points between the receiver resonance circuit 33A and the immittance filter 35.

The above configuration of the second embodiment achieves the same advantageous effects achieved by the first embodiment. Even if opening of the output side of the first power supply unit 41 to the loads 45 causes no power supply from the first power supply unit 41 to the loads 45, power supply from the connection points between the receiver resonance circuit 33A and the immittance filter 35 to the second power supply unit 42 is continuously performed. This therefore enables various control devices or circuits, such as the control circuit 44 illustrated in Fig. 5, which operate based on power supplied from the second power supply unit 42, to continuously operate. The various control devices or circuits, which operate based on power supplied from the second power supply unit 42 will be collectively described later.

The power supply portions to the second power supply unit 42 according to the second embodiment are not limited to the connection portions between the receiver resonance circuit 33A and the immittance filter 35. Fig. 11 illustrates a power receiving circuit 30B according to a first modification of the second embodiment. As illustrated as the power receiving circuit 30B in Fig. 11, the second power supply unit 42 can be connected to both ends of the capacitor CI of the immittance filter 35.

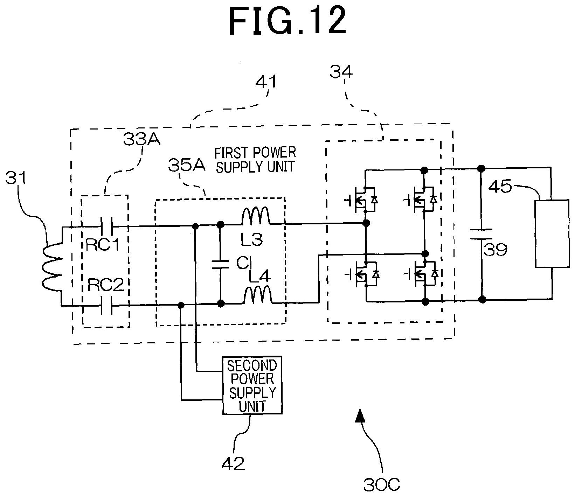

Fig. 12 illustrates a power receiving circuit 30C according to a second modification of the second embodiment. As illustrated as the power receiver circuit 30C in Fig. 12, the power receiving circuit 30C includes an immittance filter 35A without using reactors L1 and L2. Specifically, the immittance filter 35A uses, as an alternative to reactors L1 and L2, leakage inductances of the power receiving coil 31, which is connected to the immittance filter 35A through the receiver resonance circuit 33A. This configuration of the power receiving circuit 30C results in the configuration of the immittance filter 35A being simplified and therefore smaller is size.

### Third embodiment

The following described a power receiving apparatus 30D according to the third embodiment.

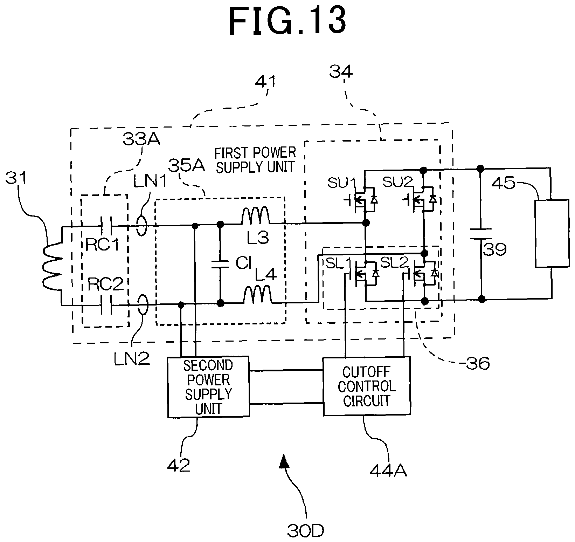

Fig. 13 schematically illustrates a configuration of the power receiving apparatus 30D. The power receiving apparatus 30D includes the immittance filter 35A illustrated in Fig. 12, which is identical to the second modification of the second embodiment. Additionally, the power receiving apparatus 30D includes a cutoff control circuit 44A to which DC power is supplied from the second power supply unit 42, which is different from the second embodiment.

The four switches SW of the rectifier circuit 34 include two switches constituting a lower arm 36 of the rectifier circuit 34, which will also be referred to as lower-arm switches SL1 and SL2, and the remaining two switches constituting an upper arm of the rectifier circuit 34, which will also be referred to as upper-arm switches SU1 and SU2. Each of the upper- and lower-arm switches SU1, SU2, SL1, and SL2 is configured to be driven by the drive control circuit 44 illustrated in Fig. 5. That is, the lower-arm switches SL1 and SL2 are configured to be turned on by a drive signal outputted from the drive control circuit 44 or a drive signal outputted from the cutoff control circuit 44A in a so-called wired-OR drive mode.

When the cutoff control circuit 44A detects there is an anomaly in the first power supply unit 41 and/or one of the loads 45 that are loads of the first power supply unit 41, the cutoff control circuit 44A outputs the drive signal to each of the lower-arm switches SL1 and SL2 of the lower-arm 36, thus turning on each of the lower-arm switches SL1 and SL2. This results in the power-supply line LN1 and the power-supply line LN2 of the first power supply unit 41 being substantially short-circuited at the output side of the immittance filter 35A although there is an on resistance of each of the lower-arm switches SL1 and SL2. The lower-arm switches SL1 and SL2, which are controlled to be simultaneously turned on by the cutoff control circuit 44A, serve as a protective circuit for the loads 45 against the first power supply unit 41A.

While the lower-arm switches SL1 and SL2 are in the on state, although no power supply is performed by the first power supply unit 41, the second power supply unit 42 is configured to operate normally based on power supplied from the connection points between the receiver resonance circuit 33A and the immittance filter 35A. This therefore results in the second power supply unit 42 supplying DC power, which is required for the cutoff control circuit 44A to operate, to the cutoff control circuit 44A. This is because the voltage level at each input terminal of the immittance filter 35, 35A illustrated in each of Figs. 10 to 13 or the voltage level at each terminal of the capacitor CI is maintained at a substantially constant level between a first case where the immittance filter 35, 35A outputs current normally and a second case where the power-supply line LN1 and the power-supply line LN2 of the first power supply unit 41 are substantially short-circuited at the output side of the immittance filter 35A so that the protective circuit is operating.

Specifically, while both the lower-arm switches SL1 and SL2 are in the on state so that the protective circuit is operating, the input to the rectifier circuit 34A becomes zero volts, resulting in the first power supply unit 41 maintaining no output power. In contrast, the voltage at each input terminal of the capacitor CI included in the immittance filter 35, 35A is maintained in the substantially same state as the normal state where the AC power with the resonance frequency is supplied to the input terminal of the capacitor CI. This therefore enables the second power supply unit 42, which has one of the circuit configurations illustrated in Figs. 6 to 9 or its equivalent circuit configuration, to receive the AC power and to continuously supply predetermined DC power based on the AC power to, for example, the cutoff control circuit 44A.

The power receiving apparatus 30D according to the third embodiment is configured to drive the lower-arm switches SL1 and SL2 of the rectifier circuit 34 to accordingly short-circuit the outputs of the first power supply unit 41 in the occurrence of an anomaly in the loads 45. This configuration therefore stops power supply from the first power supply unit 41 to the loads 45. Additionally, while both the lower-arm switches SL1 and SL2 are in the on state, the second power supply unit 42 continuously outputs predetermined DC power to one or more outside devices, such as the cutoff control circuit 44A or a cutoff control circuit 44B described later, which is the same as the case where the first power supply unit 41 is operating normally.

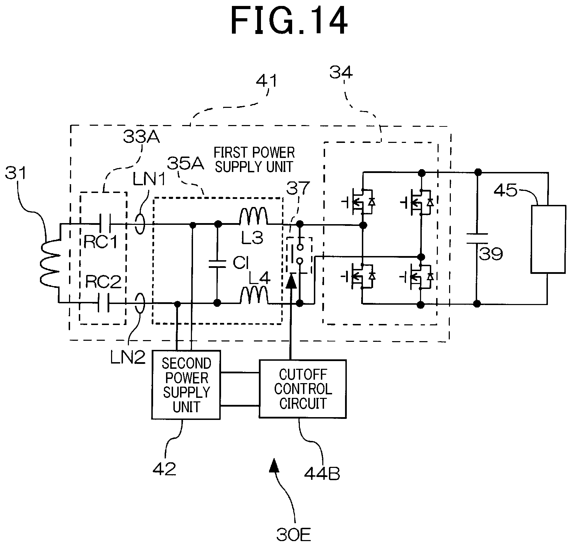

The circuit configuration illustrated in Fig. 13 simultaneously turns on both the lower-arm switches SL1 and SL2 of the rectifier circuit 36 in order to short-circuit the outputs of the immittance filter 35A. Alternatively, a power receiving apparatus 30E illustrated in Fig. 14 includes a dedicated short-circuit relay 37 between the outputs of the first power supply unit 41, and the cutoff control circuit 44B drives the dedicated short-circuit relay 37 to accordingly short-circuit the outputs of the first power supply unit 41. Such a dedicated short-circuit relay 37 can be easily implemented by a relay device or a switch. The circuit configuration illustrated in Fig. 14 is capable of short-circuiting the outputs of the first power supply unit 41 in the occurrence of an anomaly in the loads 45, and therefore the circuit configuration illustrated in Fig. 14 achieves the same advantageous effects as those achieved by the circuit configuration illustrated in Fig. 13.

### Fourth embodiment

The following described a power receiving apparatus 30E according to the fourth embodiment.

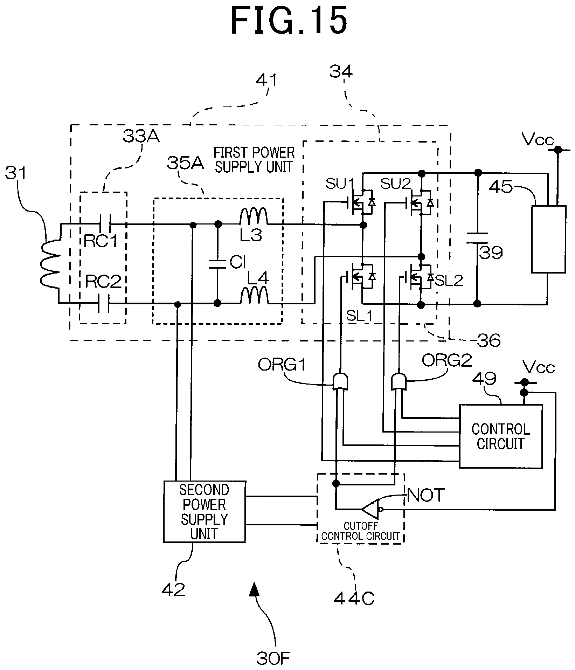

Fig. 15 schematically illustrates a configuration of the power receiving apparatus 30E. The power receiving apparatus 30E includes the immittance filter 35A, which is identical to the second or third embodiment. Additionally, the power receiving apparatus 30E includes a cutoff control circuit 44C to which DC power is supplied from the second power supply unit 42, which is different from the second or third embodiment. Additionally, the power receiving apparatus 30E includes a control circuit 49 for driving the four switches SU1, SU2, SL1, and SL2 to accordingly perform synchronous rectification. The control circuit 49 according to an example illustrated in Fig. 15 is configured to operate based on a power supply voltage Vcc that is created from a DC voltage supplied from the first power supply unit 41 to the loads 45.

The power receiving apparatus 30E includes two-input OR gates ORG1 and ORG2. The control circuit 49 is configured to output first and second drive signals directly to the respective gates of the upper-arm switches SU1 and SU2. The control circuit 49 is configured to output a third drive signal to one of the two input terminals of the two-input OR gate ORG1, and output a fourth drive signal to one of the two input terminals of the two-input OR gate ORG2. The third drive signal is outputted through the two-input OR gate ORG1 to the gate of the lower-arm switch SL1, and the fourth drive signal is outputted through the two-input OR gate ORG2 to the gate of the lower-arm switch SL2.

The cutoff control circuit 44C is configured to output a signal to the other of the two input terminals of each of the two-input OR gates ORG1 and ORG2. The cutoff control circuit 44C includes a NOT gate NOT to which the power supply voltage Vcc is inputted. An output of the NOT gate NOT is inputted as the output signal of the cutoff control circuit 44C to the other of the two input terminals of each of the two-input OR gates ORG1 and ORG2. If the power supply voltage Vcc supplied from the loads 45 becomes zero volts, the output signal of the cutoff control circuit 44C including the NOT gate NOT becomes a high level. That is, even if each of the third and fourth drive signals outputted from the control circuit 49 becomes a low level due to the failure of the power supply voltage Vcc, the output of each of the two-input OR gates ORG1 and ORG2 is maintained at the high level. This results in the lower-arm switches SL1 and SL2 being in the on state, making it possible to, like the third embodiment, cut off the output voltage of the first power supply unit 41.

The power receiving apparatus 30E according to the fourth embodiment is configured such that the cutoff control circuit 44C supplied with power from the second power supply unit 42 and the two-input OR gates ORG1 and ORG2 work to cause the rectifier circuit 34 to cut off the output of the first power supply unit 41. The above configuration of the power receiving apparatus 30E enables the power supplied from the second power supply unit 42 to have merely a low level. The second power supply unit 42 included in the power receiving apparatus 30E, which has one of the simplified configurations illustrated in Figs. 6 to 9, improves the utility of the power receiving apparatus 30E.

### Other exemplary configurations

A first exemplary configuration in the other exemplary configurations is a power receiving apparatus for wireless receipt of power supply. The power receiving apparatus includes a power receiving coil configured to wirelessly receive external alternating-current power using magnetic coupling, and a first power supply unit including a rectifier circuit for converting the alternating-current power received by the power receiving coil into first direct-current power. The first power supply unit is configured to supply the first direct-current power to one or more loads as main power. The power receiving apparatus includes a second power supply unit connected to an input stage of the first power supply unit and configured to output second direct-current power used for control of the first power supply unit.

The above configuration of the power receiving apparatus enables the second power supply unit to receive and output the second direct-current power from the input stage of the first power supply unit. This therefore enables the second power supply unit to continuously perform power supply even if there is an anomaly in the first power supply unit and/or an anomaly in the one or more loads whose power is supplied from the first power supply unit.

The alternating-current power supplied from the first power supply unit is the main power used by the one or more loads. For example, the alternating-current power is used to create motion power for moving, for example, the one or more loads. Alternatively, the alternating-current power is used to drive auxiliary devices, such as an air-conditioner and/or a power generator included in the one or more loads. In contrast, the second direct-current power supplied from the second power supply unit is used for control of the first power supply unit. Control of the first power supply unit is for example to stop the output of the first power supply unit, interrupt the output of the first power supply unit, and/or drive a protective circuit for protecting the first power supply unit. The second direct-current power supplied from the second power supply unit is used to perform the above control operations. The second direct-current power supplied from the second power supply unit can be supplied to control circuits that perform the other control operations. For example, the second direct-current power supplied from the second power supply unit can be used as (i) power for emergency external communications, (ii) power for an emergency warning device, (iii) power for driving warning lamps, and/or (iv) power for backup power supply circuits for drive recorders and/or memory devices included in the one or more loads device.

The one or more loads device may include a motion power generator, such as a motor or a solenoid, a heating device, such as a heater, a light emitting device, such as a lighting device, a sound outputting device, such as a speaker, or other various devices.

In a second exemplary configuration in the other exemplary configurations, the one or more loads may be provided in a movable object. Such a movable object in which the one or more loads are provided is a four-wheel motor vehicle, a two-wheel vehicle, a large bus, a large truck, or a driverless vehicle, such as an autonomous carrying vehicle. Alternatively, a moving vehicle without wheels, such as a hovercraft or a magnetically elevated linear-motor car, can be used as movable object.

The power receiving coil, which is configured to wirelessly receive external alternating-current power using magnetic coupling, can be installed in the housing of the movable object or exposed outside the movable object. A power transmission coil, which supplies power using magnetic coupling with the power receiving coil, can be mounted under or on a floor or a road surface on which the movable object is movable. The power transmission coil can be mounted on or in a wall surface, or mounted on or in a ceiling. If the movable object is a straddle monorail, the movable object can supply or receive power through magnetic coupling in rails that restrict motion of the movable object. The power receiving coil can be arranged to adjacently face the power transmission coil or can be supply or receive power through a relay coil interposed between the power receiving coil and the power transmission coil. If the movable object is equipped with wheels, such as tire-wheel assemblies, the relay coil can be installed in the tire or wheel itself. The one or more loads of the movable object may include a motor or a cell motor for moving the movable object, a heater or a compressor for air-conditioning, various pumps, electrical components, or other devices.

A third exemplary configuration in the other exemplary configurations may further include a filter unit provided between the power receiving coil and the rectifier circuit, and the filter unit may be an immittance filter comprised of at least one reactor and a capacitor. If the power receiving coil and the rectifier circuit serve as a voltage source, the voltage source may be connected to the immittance filter, which obtains a current power source. As the immittance filter, various types of filters, such as T-LCL immittance filter or a π-CLC immittance filter, can be used.

In a fourth exemplary configuration in the other exemplary configurations, each of the second power supply unit and the immittance filter has an input stage. The input stage of the second power supply unit is connected to the input side of the immittance filter or connected in parallel to the capacitor constituting the immittance filter. Even if there is an anomaly in the output stage of the rectifier circuit so that the first power supply unit fails to supply power, the second power supply unit enables continuous power supply based on a voltage across a capacitor of the immittance filter, making it possible to control the first power supply unit using the supplied power from the second power supply unit. The input stage of the second power supply unit can be connected can be connected to both ends of the power receiving coil or can be connected to the output stage of the resonance circuit if the power receiving coil is connected to the resonance circuit.

A fifth exemplary configuration in the other exemplary configurations, which depends on the third or fourth exemplary configuration, may further include a short-circuit unit located at an input stage of the rectifier of the first power supply unit. The short-circuit unit is controlled by the second DC power supplied from the second power supply unit to cut off power supply to the rectifier circuit of the first power supply unit. This enables cutoff power supply from the first power supply unit. If a suitable filter unit, such as an immittance filter is located at the input stage of the rectifier circuit, it is possible to continuously perform power supply to the second power supply unit even if power supply from the first power supply unit is interrupted. One or more switches or one or more relay contacts can be used as the short-circuit unit.

In a sixth exemplary configuration in the other exemplary configurations, which depends on the third or fourth exemplary configuration, the rectifier circuit of the first power supply unit is a synchronous rectifier circuit comprised of a pair of first and second power-supply lines and plural switches located on the first power-supply line. The power receiving apparatus further includes control means for performing short-circuit control to simultaneously turn on the plural switches located on the first power-supply line. This enables execution of the short-circuit control using a part of the rectifier circuit, resulting in both reduction in size of the power receiving apparatus and resource saving.

In a seventh exemplary configuration in the other exemplary configurations, the second power supply unit is configured to supply, to the control means, power required for the control means to perform the short-circuit control. This prevents shortage of power supply during the short-circuit control.

An eighth exemplary configuration in the other exemplary configurations may further include first and second power-supply lines connecting between the power receiving coil and the second power supply unit, and an insulating capacitor mounted on at least one of the first and second power-supply lines. The second power supply unit includes, in a sequence from an upstream side thereof, (i) a rectifier unit comprised of at least one diode and (ii) a stabilized power supply. The stabilized power supply is comprised of a Zener diode connected to the first and second power-supply lines, and a smoothing capacitor connected to the first and second power-supply lines in parallel to the Zener diode.

This eighth exemplary configuration makes it possible to obtain a voltage of the DC power outputted from the second power supply unit without a large-sized component, such as a step-down transformer. If insulating capacitors are mounted to the respective first and second power-supply lines, it is possible to electrically isolate the second power supply unit from a circuit extending from the power receiving coil to the first power supply unit. The stabilized power supply is not limited to the structure comprised of a Zener diode, and can be comprised of a transistor or a three-terminal regulator configured to output a predetermined level voltage.

In a ninth exemplary configuration in the other exemplary configurations, the rectifier unit may be configured as a half-wave rectifier or a full-wave rectifier. That is, the ninth exemplary configuration properly selects one of the half-wave rectifier or the full-wave rectifier according to the power required. If power obtained by half-wave rectification is enough for the one or more loads, it is possible to reduce the number of rectifier diodes, resulting in resource saving.

In a tenth exemplary configuration in the other exemplary configurations, the rectifier unit includes, as the at least one diode, a first diode mounted on the first power-supply line, and a second diode serving as a backflow prevention diode mounted on the second power-supply line. This prevents backflow of current.

An eleventh exemplary configuration, which depends on any one of the first to tenth exemplary configurations, is a wireless power transfer system. The wireless power transfer system includes a power receiving apparatus according to any one of the first to tenth exemplary configurations. The wireless power transfer system includes a power transmission apparatus including a power transmission coil. When the power receiving coil is located to be close to the power transmission coil, the power transmission coil is magnetically coupled to the power receiving coil to accordingly supply the alternating-current power to the power receiving coil. This makes it possible to easily offer the wireless power transfer system.

In a twelfth exemplary configuration in the other exemplary configurations, the power transmission apparatus may include a transmitter resonance circuit comprised of the power transmission coil and a power transmission capacitor. The power receiving apparatus may include a receiver resonance circuit comprised of the power receiving coil and a receiver capacitor. The power receiving apparatus may be configured to receive the alternating-current power through the receiver rectifier circuit. The alternating-current power may have a frequency determined based on a resonance frequency between the transmitter and receiver resonance circuits. This offers wireless power transfer with high efficiency using resonance. The frequency of the alternating-current power to be transferred between the power transmission apparatus and the power receiving apparatus does not have to completely match the resonance frequency as the peak frequency of the resonance. That is, the AC power whose frequency is deviated from the resonance frequency can be transferred between the power transmission apparatus and the power receiving apparatus as long as the frequency of the AC power is within a predetermined allowable design frequency range.

One or more power receiving apparatuses of the wireless power transfer system may receive power from a single power transmission apparatus, or one or more power transmission apparatuses may transfer power to a single power receiving apparatus. The power receiving apparatus of the wireless power transfer system may be configured to receive power simultaneously supplied from the plurality of power transmission apparatuses. Each of the plurality of power transmission apparatuses 50 according to each embodiment can be configured to selectively perform power transfer operations when the movable object 20 approaches the corresponding one of the power transmission apparatuses 50. All the power transmission apparatuses 50 can be configured to constantly perform power transfer.

A thirteenth exemplary configuration in the other exemplary configurations is a method of wireless power transfer. The method includes
(I) Applying an alternating-current voltage to a power transmission coil of a power transmission apparatus
(II) Converting, into direct-current power, alternating-current power electromagnetically induced in a power receiving coil located at a position where the power receiving coil is magnetically couplable with the power transmission coil, the direct-current power being supplied as main power to one or more receiver loads
(III) Receiving power from an input stage of the rectifier circuit
(IV) Outputting, based on the received power, power used to control the main power, the outputted power having a level lower than a level of the main power.

The above method obtains the power received from the input stage of the rectifier circuit. This therefore enables control related to the output of the main power to be continuously performed even if there is an anomaly in a circuit using the main power and/or an anomaly in a circuit supplying the main power so that the supply of the main power is stopped.

In each embodiment, a part of the configuration, which is implemented by hardware, can be replaced with software. A part of the structure, which is implemented by software, can be replaced with a discrete circuit configuration. If a part or all of the functions disclosed in the present disclosure are implemented by software, i.e., computer programs, the software, i.e., the software programs, can be stored in computer-readable storage medium and offered as the computer-readable storage medium. The "computer-readable non-transitory storage medium" may include mobile storage medium, such as flexible disks and/or CD-ROMs, various internal storage devices in computers, such as various RAMs and ROMs, and/or external storage devices attachable to computers, such as hard-disk drives. Specifically, the "computer-readable non-transitory storage medium" have a broad meaning including any storage medium that can non-temporarily store data packets.

The present disclosure is not limited to the above embodiments, and can be implemented by various configurations within the scope of the present disclosure. For example, technical features included in the embodiments, which correspond to technical features included in exemplary measures described in the SUMMARY of the present disclosure, can be freely combined with each other or can be freely replaced with another feature in order to solve a part or all of the above issue and/or achieve a part or all of the above advantageous benefits. One or more of the technical features included in the above exemplary embodiment, which are not described as essential elements in the specification, can be deleted as necessity arises.

The controllers and their control methods described in the present disclosure can be implemented by a dedicated computer including a memory and a processor programmed to perform one or more functions embodied by one or more computer programs.

The controllers and their control methods described in the present disclosure can also be implemented by a dedicated computer including a processor comprised of one or more dedicated hardware logic circuits.

The controllers and their control methods described in the present disclosure can further be implemented by a processor system comprised of a memory, a processor programmed to perform one or more functions embodied by one or more computer programs, and one or more hardware logic circuits.

The one or more programs can be stored in a computer-readable non-transitory storage medium as instructions to be carried out by a computer or a processor. The "computer-readable non-transitory storage medium" may include mobile storage medium, such as flexible disks and/or CD-ROMs, various internal storage devices in computers, such as various RAMs and ROMs, and/or external storage devices attachable to computers, such as hard-disk drives. Specifically, the "computer-readable non-transitory storage medium" have a broad meaning including any storage medium that can non-temporarily store data packets.

## Claims

1. A power receiving apparatus (30) for wireless receipt of power supply, the power receiving apparatus comprising:
a power receiving coil (31) configured to wirelessly receive external alternating-current power using magnetic coupling;
a first power supply unit (41) comprising a rectifier circuit (34) for converting the alternating-current power received by the power receiving coil into first direct-current power, the first power supply unit being configured to supply the first direct-current power to one or more loads as main power; and
a second power supply unit (42) connected to an input stage of the first power supply unit and configured to output second direct-current power used for control of the first power supply unit.

2. The power receiving apparatus according to claim 1, wherein:
the one or more loads are provided in a movable object (20).

3. The power receiving apparatus according to claim 1, further comprising:
a filter unit provided between the power receiving coil and the rectifier circuit, wherein:
the filter unit is an immittance filter comprised of at least one reactor (L1, L2, L3, L4) and a capacitor (CI).

4. The power receiving apparatus according to claim 1, wherein:
each of the second power supply unit and the immittance filter has an input stage; and
the input stage of the second power supply unit is connected to the input side of the immittance filter or connected in parallel to the capacitor constituting the immittance filter.

5. The power receiving apparatus according to claim 3 or 4, further comprising:
a short-circuit unit (37) located at an input stage of the rectifier of the first power supply unit, the short-circuit unit being controlled by the second DC power supplied from the second power supply unit to cut off power supply to the rectifier circuit of the first power supply unit.

6. The power receiving apparatus according to claim 3 or 4, wherein:
the rectifier circuit of the first power supply unit is a synchronous rectifier circuit comprised of a pair of first and second power-supply lines and plural switches located on the first power-supply line,
the power receiving apparatus further comprising:
control means for performing short-circuit control to simultaneously turn on the plural switches located on the first power-supply line.

7. The power receiving apparatus according to claim 6, wherein:
the second power supply unit is configured to supply, to the control means, power required for the control means to perform the short-circuit control.

8. The power receiving apparatus according to claim 3 or 4, further comprising:
first and second power-supply lines connecting between the power receiving coil and the second power supply unit; and
an insulating capacitor (CC1, CC2) mounted on at least one of the first and second power-supply lines,
wherein:
the second power supply unit comprises, in a sequence from an upstream side thereof, (i) a rectifier unit (RE) comprised of at least one diode (RD1, RD2, RD3, RD4) and (ii) a stabilized power supply (SP) comprised of:
a Zener diode (TzD) connected to the first and second power-supply lines; and
a smoothing capacitor (CF) connected to the first and second power-supply lines in parallel to the Zener diode.

9. The power receiving apparatus according to claim 8, wherein:
the rectifier unit is configured as a half-wave rectifier or a full-wave rectifier.

10. The power receiving apparatus according to claim 8, wherein:
the rectifier unit comprises, as the at least one diode, a first diode (RD1) mounted on the first power-supply line, and a second diode (PD2) serving as a backflow prevention diode mounted on the second power-supply line.

11. A wireless power transfer system comprising:
a power receiving apparatus according to any one of claims 1 to 4; and
a power transmission apparatus (50) comprising a power transmission coil (51),
when the power receiving coil is located to be close to the power transmission coil, the power transmission coil being magnetically coupled to the power receiving coil to accordingly supply the alternating-current power to the power receiving coil.

12. The wireless power transfer system according to claim 11, wherein:
the power transmission apparatus comprises a transmitter resonance circuit (53) comprised of the power transmission coil and a power transmission capacitor (52); and
the power receiving apparatus comprises a receiver resonance circuit (33) comprised of the power receiving coil and a receiver capacitor, the power receiving apparatus being configured to receive the alternating-current power through the receiver rectifier circuit,
the alternating-current power having a frequency determined based on a resonance frequency between the transmitter and receiver resonance circuits.

13. A method of wireless power transfer, the method comprising:
applying an alternating-current voltage to a power transmission coil of a power transmission apparatus;
converting, into direct-current power, alternating-current power electromagnetically induced in a power receiving coil located at a position where the power receiving coil is magnetically couplable with the power transmission coil, the direct-current power being supplied as main power to a one or more receiver loads;
receiving power from an input stage of the rectifier circuit; and
outputting, based on the received power, power used to control the main power, the outputted power having a level lower than a level of the main power.
